# EUROPÄISCHE PATENTANMELDUNG

(11) **EP 0 949 568 A2**
(43) Veröffentlichungstag der Anmeldung: **13.10.1999**
(21) Anmeldenummer: 99106634.1
(22) Anmeldetag: 31.03.1999
(51) Int. Cl.: G06F 12/06

(54) **Elektrische Schaltungsanordnung mit einer wählbaren Zuordnung von physikalisch diskreten RAM-Speichern zu einzelnen Datenkategorien**

(30) Priorität: 06.04.1998 DE 19815382
(71) Anmelder: STMicroelectronics GmbH, 85630 Grasbrunn (DE)
(72) Erfinder: Pilot, Laurent, 80799 München (DE)
(74) Vertreter: Hirsch, Peter

(57) **Zusammenfassung**

Elektrische Schaltungsanordnung mit einer wählbaren Zuordnung von physikalisch diskreten RAM-Speichern zu einzelnen Datenkategorien, umfassend eine Datenverarbeitungsschaltung (MP), die für die Verarbeitung einer Mehrzahl verschiedener Datenkategorien (X, Y, P) ausgebildet ist; eine der Mehrzahl verschiedener Datenkategorien (X, Y, P) entsprechende Anzahl der RAM-Speicher (RAM1, RAM2, RAM3) zur Speicherung von Daten je einer der Datenkategorien (X, Y, P); und eine steuerbare Selektionseinrichtung (RSR, mux1, mux2, mux3), mittels welcher die einzelnen RAM-Speicher (RAM1, RAM2, RAM3) den einzelnen Datenkategorien (X, Y, P) in Abhängigkeit von Selektionssteuersignalen in wählbarer Weise zuordenbar sind.

## Beschreibung

Die Erfindung betrifft eine elektrische Schaltungsanordnung mit einer Datenverarbeitungsschaltung, die für die Verarbeitung einer Mehrzahl verschiedener Datenkategorien ausgebildet ist, und mit einer der Mehrzahl verschiedener Datenkategorien entsprechenden Anzahl physikalisch diskreter RAM-Speicher zur Speicherung von Daten je einer der Datenkategorien.

Ein Beispiel einer derartigen Schaltungsanordnung ist ein integrierter digitaler Signalprozessor, wie er in dem Datenblatt "Motorola Semiconductor Technical Data DSP 56004 und DSP 56007'' von 1995 beschrieben ist. Dieser digitale Signalprozessor umfaßt unter anderem eine Datenverarbeitungseinheit in Form einer ALU (Recheneinheit) und drei physikalisch diskrete RAM-Speicher, von denen einer als Programmspeicher dient und die anderen beiden als Speicher für X-Daten bzw. Y-Daten, wobei diese Zuordnung der RAM-Speicher zu diesen einzelnen Datenkategorien fest ist.

Eine DAM-Speicherarchitektur (wobei DAM für Data Adressable Memory steht), die mit drei physikalisch diskreten Speichern aufgebaut ist, die je einer anderen Datenkategorie fest zugeordnet sind, ist aus der WO 93/20515 bekannt.

Aus der Entgegenhaltung DE-A1-195 26 007 ist ein horizontal partitionierter Befehls-Cache-Speicher bekannt, der ein einziges Array von Speicherzellen aufweist, die hinsichtlich des Schreibvorganges in für unterschiedliche Datenkategorien spezifische Speicherregionen aufgeteilt werden.

Die aus dem genannten Datenblatt von Motorola bekannte Schaltungsanordnung ist in der beiliegenden Fig. 5 blockschaltbildartig dargestellt. In Übereinstimmung mit den anderen beiliegenden Figuren ist der datenverarbeitende Block als Mikroprozessor MP bezeichnet. Dieser ist mit einem RAM1 für die Speicherung von X-Daten über einen Bus X, mit einem RAM2 für die Speicherung von Y-Daten über einen Bus Y und mit einem RAM3 für eine Programmspeicherung über einen Bus P verbunden. Die drei RAM-Speicher sind auf demselben Halbleiterchip wie der Mikroprozessor MP untergebracht und können unterschiedliche Speicherkapazitäten haben.

Die Daten einer jeden der Datenkategorien X, Y und Programm können nicht auf mehrere der RAM-Speicher verteilt werden, weil sonst die Zuordnung zu der jeweiligen Kategorie verlorengeht. Es besteht für jede Datenkategorie eine feststehende Begrenzung hinsichtlich der speicherbaren Datenmenge entsprechend der Speicherkapazität des je fest zu-geordneten RAM. Reicht für eine bestimmte Anwendung die Speicherkapazität eines der RAM nicht aus, ist der bestehende Chip für diese Anwendung nicht einsetzbar. Für diese Anwendung muß dann ein Chip hergestellt werden, bei welchem der entsprechende RAM-Speicher eine entsprechend höhere Speicherkapazität aufweist.

Mit der vorliegenden Erfindung wird eine elektrische Schaltungsanordnung der eingangs angegebenen Art verfügbar gemacht, die eine höhere Anwendungsflexibilität erlaubt.

Eine erfindungsgemäße Schaltungsanordnung ist im Anspruch 1 angegeben und kann entsprechend den abhängigen Ansprüchen ausgebildet sein.

Die erfindungsgemäße Schaltungsanordnung ermöglicht eine wählbare Zuordnung von physikalisch diskreten RAM-Speichern zu einzelnen Datenkategorien und umfaßt eine Datenverarbeitungsschaltung, die für die Verarbeitung einer Mehrzahl verschiedener Datenkategorien ausgebildet ist, eine der Mehrzahl verschiedener Datenkategorien entsprechende Anzahl der RAM-Speicher zur Speicherung von Daten je einer der Datenkategorien und eine steuerbare Selektionseinrichtung, mittels welcher die einzelnen RAM-Speicher den einzelnen Datenkategorien in Abhängigkeit von Selektionssteuersignalen in wählbarer Weise zuordenbar sind.

Mit der Erfindung wird somit eine Schaltungsanordnung verfügbar gemacht, bei welcher die feste hardwaremäßige Zuordnung der einzelnen RAM-Speicher zu den einzelnen Datenkategorien durch eine per Software programmierbare Zuordnung der einzelnen RAM-Speicher zu den einzelnen Datenkategorien ersetzt ist. Dies hat beispielsweise den enormen Vorteil, daß man die einzelnen RAM-Speicher, wenn sie unterschiedliche Speicherkapazitäten aufweisen, je nach der speziellen Anwendung unterschiedlichen Datenkategorien zuordnen kann. Reicht die Speicherkapazität eines der RAM-Speicher, dem bei der bekannten Schaltungsanordnung eine bestimmte Datenkategorie fest zugeordnet ist, bei einer bestimmten Anwendung für die Datenmenge dieser Datenkategorie nicht aus, kann man bei der erfindungsgemäßen Schaltungsanordnung auf einen anderen RAM-Speicher ausweichen, der eine höhere Speicherkapazität besitzt.

Um eine besonders hohe Flexibilität verfügbar zu machen, kann man auch einen der RAM-Speicher mit einer höheren Speicherkapazität ausbilden, als sie die RAM-Speicher der bekannten Schaltungsanordnung üblicherweise aufweisen.

Die softwaremäßige Zuordnung der einzelnen RAM-Speicher zu den einzelnen Datenkategorien kann für eine bestimmte Anwendung fest programmiert sein. Es besteht aber auch die Möglichkeit, für Anwendungen, bei denen sich die Datenmengen der einzelnen Datenkategorien zu verschiedenen Betriebszeiten ändern können, die Zuordnung der einzelnen RAM-Speicher zu den einzelnen Datenkategorien während des Betriebs der Schaltungsanordnung zu ändern. Dies kann entweder dadurch geschehen, daß von vornherein durch ein RAM-Selektionsprogramm festgelegt wird, zu welchen Betriebszeiten oder bei welchen Betriebszuständen der Schaltungsanordnung welcher der RAM-Speicher welcher der Datenkategorien zugeordnet wird. Oder man läßt die Schaltungsanordnung die jeweilige RAM-Selektion ohne vorherige Selektionsprogrammierung selbst durchführen, indem laufend die Datenmenge der einzelnen Datenkategorien erfaßt und in Abhängigkeit von dieser Erfassung eine automatische Zuordnung der einzelnen RAM-Speicher zu den einzelnen Datenkategorien gesteuert wird.

Erfindungsgemäß die einzelnen RAM-Speicher mittels einer Selektionseinrichtung wahlweise unterschiedlichen Datenkategorien zuordnen zu können, kann selbst dann von Vorteil sein, wenn alle RAM-Speicher die gleiche Speicherkapazität haben, wenn nämlich die RAM-Speicher außer mit der Datenverarbeitungsschaltung mit weiteren Schaltungen unterschiedlicher Art verbunden sind, beispielsweise mit unterschiedlich wirkenden Weiterverarbeitungsschaltungen, und der Wunsch besteht, die einzelnen Datenkategorien wahlweise der einen oder der anderen Weiterverarbeitungsart zu unterwerfen.

Bei der Datenverarbeitungsschaltung kann es sich um einen Mikroprozessor, eine CPU (Zentralverarbeitungseinheit), eine ALU (Arithmetik-Logik-Einheit) oder irgendeine andere Datenverarbeitungsschaltung handeln.

Die Selektionseinrichtung kann eine steuerbare Schaltereinrichtung sein, deren jeweiliger Schaltzustand vom jeweiligen Selektionssteuersignal abhängt und die mittels datenverarbeitungsschaltungsseitiger Busleitungen mit der Datenverarbeitungsschaltung und mittels speicherseitiger Busleitungen mit den RAM-Speichern verbunden ist, wobei die datenverarbeitungsschaltungsseitigen Busleitungen je einer der Datenkategorien fest zugeordnet sind und die speicherseitigen Busleitungen mit den datenverarbeitungsschaltungsseitigen Busleitungen in Abhängigkeit vom jeweiligen Schaltzustand der steuerbaren Schaltereinrichtung verknüpfbar sind.

Die steuerbare Schaltereinrichtung kann eine der Anzahl der RAM-Speicher entsprechende Zahl Multiplexer aufweisen, die je einem der RAM-Speicher zugeordnet sind und von denen jeder über eine datenkategoriemäßig fest zugeordnete datenverarbeitungsschaltungsseitige Busleitung pro Datenkategorie mit der Datenverarbeitungsschaltung und über eine einzige, speichermäßig fest zugeordnete speicherseitige Busleitung mit dem je zugeordneten RAM-Speicher verbunden ist. Durch Steuerung der Multiplexer ist dann eine bestimmte Zuordnung der RAM-Speicher zu den einzelnen Datenkategorien wählbar.

Die steuerbare Schaltereinrichtung kann unter Steuerung durch eine Selektionssteuerschaltung stehen, die einen Selektionsprogrammspeicher für die Speicherung einer Anzahl verschiedener Selektionscodes und eine Steuerlogik zur Umsetzung des jeweils ausgewählten Selektionscodes in ein zugehöriges Selektionssteuersignal aufweist. In dem Selektionsprogrammspeicher können mehrere RAM-Selektionen abgespeichert sein, die je nach Selektion der Zuordnung der RAM-Speicher zu den Datenkategorien auswählbar sind, beispielsweise durch einmalige Auswahl für eine bestimmte Anwendung oder durch wechselnde Auswahl während des Betriebsablaufs der Schaltungsanordnung.

Die Auswahl der jeweils gewünschten RAM-Selektion kann dadurch geschehen, daß von der Datenverarbeitungsschaltung, beispielsweise in Form eines Mikroprozessors, ein Adressensignal an den Selektionsprogrammspeicher geliefert wird, über welches Zugriff zu einem bestimmten Selektionscode genommen wird.

Die Erfindung ist besonders vorteilhaft für eine monolithisch integrierte Schaltungsanordnung der erfindungsgemäßen Art.

Die Erfindung sowie Aufgaben, Aspekte und Vorteile der Erfindung werden nun anhand von Ausführungsformen näher erläutert. In den Zeichnungen zeigen:
- Fig. 1: eine stark schematisierte Ausführungsform einer erfindungsgemäßen Schaltungsanordnung;
- Fig. 2: eine Ausführungsform der Erfindung mit Multiplexern;
- Fig. 3: eine Tabelle mit verschiedenen Selektionscodes;
- Fig. 4: die in Fig. 2 gezeigte Schaltungsanordnung bei Auswahl eines bestimmten Selektionscodes; und
- Fig. 5: das bereits erläuterte Beispiel einer herkömmlichen Schaltungsanordnung.

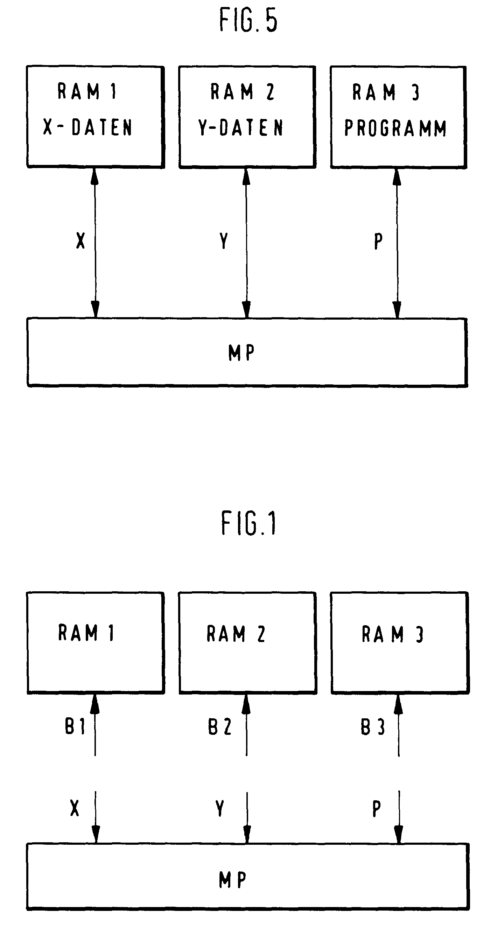

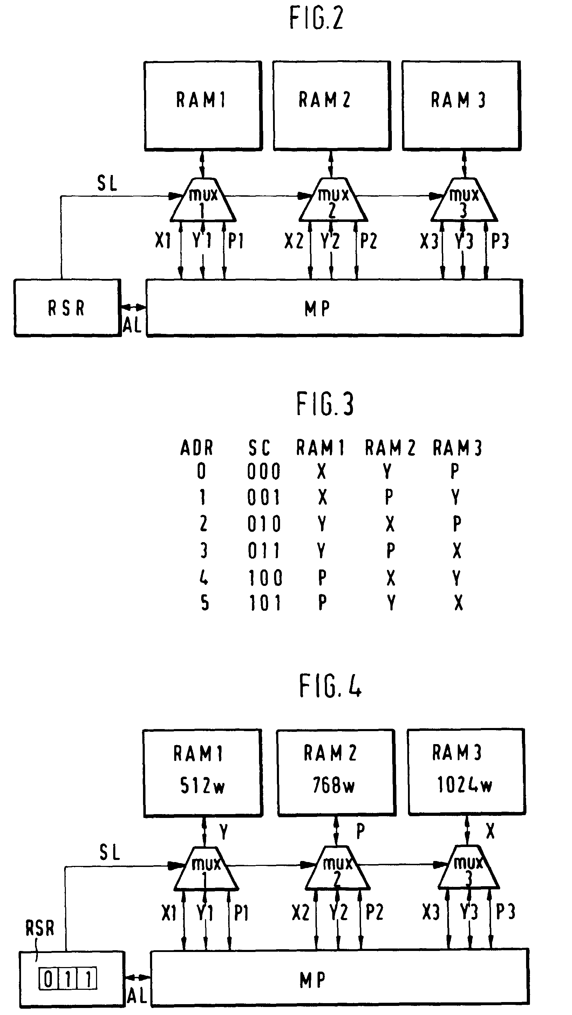

In Fig. 1, die eine erfindungsgemäße Schaltungsanordnung in schematisierter Blockschaltbilddarstellung zeigt, ist eine Datenverarbeitungsschaltung in Form eines Mikroprozessors MP gezeigt, an die drei mikroprozessorseitige Busleitungen X, Y und P für drei Datenkategorien in Form von X-Daten, Y-Daten bzw. Programmdaten angeschlossen sind. Diese drei Busleitungen dienen der Verbindung mit drei RAM-Speichern RAM1, RAM2 und RAM3. Diese sind je mit einer speicherseitigen Busleitung B1, B2 bzw. B3 verbunden. Die Verbindungen zwischen den mikroprozessorseitigen Busleitungen X, Y, P und den speicherseitigen Busleitungen B1, B2, B3 sind mit Unterbrechung dargestellt. Damit soll ausgedruckt werden, daß die spezielle Verknüpfung zwischen den mikroprozessorseitigen Busleitungen und den speicherseitigen Busleitungen nicht festgelegt sondern softwaremäßig beliebig wählbar ist, und zwar mittels einer Selektionseinrichtung, die in Fig. 1 nicht dargestellt ist. Beispielsweise kann die mikroprozessorseitige Busleitung X nach Wahl mit der speicherseitigen Busleitung B1 oder B2 oder B3 verknüpft werden. Gleiches gilt für die beiden anderen mikroprozessorseitigen Busleitungen Y und P.

Die Verwendung von drei RAM-Speichern und je drei Busleitungen ist rein beispielhaft aufzufassen. Die Erfindung ist mit jeder Mehrzahl von Speichern und Busleitungen realisierbar und vorteilhaft.

Fig. 2 zeigt eine Ausführungsform einer erfindungsgemäßen Schaltungsanordnung der in Fig. 1 gezeigten Art, bei welcher als Einrichtung zum wahlweisen Verknüpfen der mikroprozessorseitigen Busleitungen und der speicherseitigen Busleitungen eine Selektionseinrichtung mit einer Schaltereinrichtung in Form von drei Multiplexern mux1, mux2, mux3 und mit einem RAM-Selektionsregister RSR vorgesehen ist. Bei der in Fig. 2 dargestellten Ausführungsform ist jeder der drei Multiplexer mux1, mux2, mux3 mit drei mikroprozessorseitigen Busleitungen X1, Y1, P1 bzw, X2, Y2, P2 bzw. X3, Y3, P3 verbunden. Es besteht aber auch die Möglichkeit, den Mikroprozessor MP mit nur drei mikroprozessorseitigen Busleitungen X, Y, P zu verbinden und diese je auf drei multiplexerseitige Busleitungen aufzufächern, um an jedem Multiplexer die Daten einer jeden Datenkategorie verfügbar zu machen.

Jeder der Multiplexer mux1, mux2, mux3 ist über eine Steuerleitung SL mit dem RAM-Selektionsregister RSR verbunden. Dieses wiederum steht über eine Leitung AL mit dem Mikroprozessor MP in Verbindung.

Das RAM-Selektionsregister RSR stellt eine Selektionssteuereinrichtung dar, die einen Selektionscodespeicher und eine Steuerlogik umfaßt. Die Steuerlogik setzt den jeweiligen Selektionscode in Multiplexer-Steuersignale um, mit denen die Multiplexer mux1, mux2, mux3 in solche Schaltzustände gebracht werden, daß zwischen den mikroprozessorseitigen Busleitungen und den speicherseitigen Busleitungen die dem jeweiligen Selektionscode entsprechende Verknüpfung entsteht.

Bei dem Selektionscodespeicher kann es sich um ein einfaches Schieberegister handeln, in das ein z. B. vom Mikroprozessor MP gelieferter Selektionscode geschrieben wird. Vorzugsweise handelt es sich bei dem Selektionscodespeicher um einen Speicher, in dem eine Mehrzahl von Selektionscodes je unter einer anderen Speicheradresse gespeichert ist. Zugriff zu den einzelnen Selektionscodes ist über ein Adressensignal möglich, welches z. B. vom Mikroprozessor MP an den Selektionscodespeicher des RAM-Selektionsregisters über die als Adressenleitung dienende Leitung AL übertragen wird.

In Fig. 3 ist eine Tabelle gezeigt, die ein Beispiel für verschiedene Selektionscodes (SC) und deren je zugehörige RAM-Selektion zeigt. Andere Selektionscodes SC können als Default-Selektionen oder als voreingestellte oder vorprogrammierte Selektionen vorgesehen werden. Eine solche Default-Selektion kann beispielsweise vom Chip-Hersteller einer die erfindungsgemäße Schaltungsanordnung aufweisenden integrierten Schaltung für Chip-Benutzer vorprogrammiert werden, die keine bestimmte Selektion bevorzugen oder haben möchten.

Fig. 4 zeigt die Ausführungsform nach Fig. 2 bei Auswahl des Selektionscodes 011 aus der in Fig. 3 gezeigten Tabelle. Dieser Selektionscode führt zu solchen Schaltzuständen der Multiplexer mux1, mux2, mux3, däß die speicherseitigen Busleitungen B1, B2, B3 und die zugehörigen RAM-Speicher RAM1, RAM2, RAM3 den Datenkategorien Y bzw. P bzw. X zugeordnet sind. In diesem Fall dient RAM2 als Programmspeicher, RAM3 als X-Datenspeicher und RAM1 als Y-Datenspeicher.

Wenn der Selektionscodespeicher von RSR ein reines Schieberegister ist, wird der ausgewählte Selektionscode 011 vom Mikroprozessor MP über die Leitung AL in dieses Schieberegister geschrieben und zur Steuerung der Schaltzustände der Multiplexer mux1, mux2, mux3 verwendet. Ist im Selektionscodespeicher die gesamte Selektionscodetabelle, beispielsweise gemäß Fig. 3, gespeichert, braucht vom Mikroprozessor MP über die Adressenleitung AL an den Selektionscodespeicher lediglich ein Adressencode für die entsprechende Adresse ADR übertragen zu werden. Entprechend dem jeweils adressierten Selektionscode SC wird dann die Verknüpfung der Busleiter über die Multiplexer mux1, mux2, mux3 gesteuert.

In Fig. 4 sind Beispiele für unterschiedliche Kapazitäten der RAM-Speicher RAM1, RAM2 und RAM3 angegeben. Beispielsweise hat RAM1 eine Speicherkapazität für 512 Datenwörter (w), RAM2 eine Speicherkapazität für 768 Datenwörter und RAM3 eine Speicherkapazität für 1024 Datenwörter.

Bei der in Fig. 4 vorgenommenen Selektion mit dem Selektionscode 011 findet die Programmspeicherung in dem RAM2 mittlerer Speicherkapazität statt, während für die X-Daten der RAM-Speicher RAM3 mit der größten Speicherkapazität und für die Y-Daten der RAM-Speicher RAM1 mit der kleinsten Speicherkapazität verwendet wird.

Wie bereits erwähnt, kann die RAM-Selektion für eine bestimmte Anwendung fest programmiert sein oder während des Betriebes in Abhängigkeit von bestimmten Betriebszuständen geändert werden. Im ersteren Fall wird beim Booten des die erfindungsgemäße Schaltungsanordnung enthaltenden Chips die vorprogrammierte Selektion wirksam und bleibt während des gesamten auf den jeweiligen Bootvorgang folgenden Betriebes des Chips unverändert. Im zweiten Fall wird beim Booten des Chips ebenfalls eine vorprogrammierte Selektion wirksam. Während des auf das jeweiligen Booten folgenden Betriebes des Chips können aber je nach den aktuellen, sich ändernden Datenmengen der Datenkategorien X, Y und P Umselektionen gesteuert werden.

Die Erfindung ermöglicht somit eine sehr hohe Flexibilität der Benutzung und Ausnutzung der verschiedenen RAM-Speicher einer erfindungsgemäßen Schaltungsanordnung.

## Patentansprüche

1. Elektrische Schaltungsanordnung mit einer wählbaren Zuordnung von physikalisch diskreten RAM-Speichern zu einzelnen Datenkategorien, umfassend:
a) eine Datenverarbeitungsschaltung (MP), die für die Verarbeitung einer Mehrzahl verschiedener Datenkategorien (X, Y, P) ausgebildet ist;
b) eine der Mehrzahl verschiedener Datenkategorien (X, Y, P) entsprechende Anzahl der RAM-Speicher (RAM1, RAM2, RAM3) zur Speicherung von Daten je einer der Datenkategorien (X, Y, P); und
c) eine steuerbare Selektionseinrichtung (RSR, mux1, mux2, mux3), mittels welcher die einzelnen RAM-Speicher (RAM1, RAM2, RAM3) den einzelnen Datenkategorien (X, Y, P) in Abhängigkeit von Selektionssteuersignalen in wählbarer Weise zuordenbar sind.

2. Schaltungsanordnung nach Anspruch 1, mit RAM-Speichern (RAM1, RAM2, RAM3) unterschiedlicher Speicherkapazität.

3. Datenverarbeitungsschaltung nach Anspruch 1 oder 2, mit einer Datenverarbeitungsschaltung in Form eines Mikroprozessors (MP).

4. Schaltungsanordnung nach Anspruch 1 oder 2, mit einer Datenverarbeitungsschaltung in Form einer CPU.

5. Schaltungsanordnung nach einem der Ansprüche 1 bis 4, bei welcher die Selektionseinrichtung eine steuerbare Schaltereinrichtung (mux1, mux2, mux3) aufweist, deren jeweiliger Schaltzustand vom jeweiligen Selektionssteuersignal abhängt und die mittels datenverarbeitungsschaltungsseitiger Busleitungen (X1, Y1, P1 X2, Y2, P2, X3, Y3, P3) mit der Datenverarbeitungsschaltung (MP) und mittels speicherseitiger Busleitungen (B1, B2, B3) mit den RAM-Speichern (RAM1, RAM2, RAM3) verbunden ist, wobei die datenverarbeitungsschaltungsseitigen Busleitungen (X1, Y1, P1, X2, Y2, P2, X3, Y3, P3) je einer der Datenkategorien (X, Y, P) fest zugeordnet sind und die speicherseitigen Busleitungen (B1, B2, B3) mit den datenverarbeitungsschaltungsseitigen Busleitungen (X1, Y1, P1, X2, Y2, P2, X3, Y3, P3) in Abhängigkeit vom jeweiligen Schaltzustand der steuerbaren Schaltereinrichtung (mux1, mux2, mux3) verknüpfbar sind.

6. Schaltungsanordnung nach Anspruch 5, bei welcher die steuerbare Schaltereinrichtung eine der Anzahl der RAM-Speicher (RAM1, RAM2, RAM3) entsprechende Zahl Multiplexer (mux1, mux2, mux3) aufweist, die je einem der RAM-Speicher (RAM1, RAM2, RAM3) zugeordnet sind und von denen jeder über eine datenkategoriemäßig fest zugeordnete datenverarbeitungsschaltungsseitige Busleitung (X1, Y1, P1, X2, Y2, P2, X3, Y3, P3) pro Datenkategorie (X, Y, P) mit der Datenverarbeitungsschaltung (MP) und über eine einzige, speichermäßig fest zugeordnete speicherseitige Busleitung (B1, B2, B3) mit dem je zugeordneten RAM-Speicher (RAM1, RAM2, RAM3) verbunden ist.

7. Schaltungsanordnung nach Anspruch 5 oder 6, bei welcher die steuerbare Schaltereinrichtung (mux1, mux2, mux3) unter Steuerung durch eine Selektionssteuerschaltung (RSR) steht, die einen Selektionscodespeicher für die Speicherung eines Selektionscodes und eine Steuerlogik zur Umsetzung des Selektionscodes in ein zugehöriges Selektionssteuersignal aufweist.

8. Schaltungsanordnung nach Anspruch 5 oder 6, bei welcher die steuerbare Schaltereinrichtung (mux1, mux2, mux3) unter Steuerung durch eine Selektionssteuerschaltung (RSR) steht, die einen Selektionscodespeicher für die Speicherung einer Anzahl verschiedener Selektionscodes und eine Steuerlogik zur Umsetzung des jeweils ausgewählten Selektionscodes in ein zugehöriges Selektionssteuersignal aufweist.

9. Schaltungsanordnung nach Anspruch 8, bei welcher zu den einzelnen gespeicherten Selektionscodes Zugriff über ein von der Datenverarbeitungsschaltung (MP) geliefertes Adressensignal besteht.

10. Schaltungsanordnung nach einem der Ansprüche 1 bis 9, bei welcher die Schaltungsanordnung auf einer monolithisch integrierten Halbleiterschaltung untergebracht ist.
